# EUROPÄISCHE PATENTSCHRIFT

(11) **EP 2 021 715 B1**
(45) Veröffentlichungstag und Bekanntmachung des Hinweises auf die Patenterteilung: **02.03.2011**
(21) Anmeldenummer: 07725317.7
(22) Anmeldetag: 16.05.2007
(51) Int. Cl.: F27B 3/08

(54) **VERWENDUNG VON REST- UND/ODER ABFALLSTOFFEN IN ELEKTRONIEDERSCHACHTÖFEN**
USE OF RESIDUAL MATTER AND/OR WASTE IN ELECTRIC LOW-SHAFT FURNACES
UTILISATION DE RÉSIDUS ET/OU DE DÉCHETS DANS DES FOURS ÉLECTRIQUES À CUVE BASSE

(30) Priorität: 18.05.2006 DE 102006023259
(43) Veröffentlichungstag der Anmeldung: 11.02.2009
(73) Patentinhaber: AlzChem Trostberg GmbH, 83308 Trostberg (DE)
(72) Erfinder: BAUMANN, Leonhard, 84556 Kastl (DE); MÖLLER, Roland, 63546 Hammersbach (DE); HOLZRICHTER, Klaus, 83308 Trostberg (DE); SALZINGER, Josef, 84577 Tüssling (DE)
(74) Vertreter: Dey, Michael
(86) Internationale Anmeldenummer: PCT/EP2007/004402
(87) Internationale Veröffentlichungsnummer: WO 2007/134789

(56) Entgegenhaltungen:
- EP-A- 0 118 655
- EP-A- 0 657 549
- EP-A- 0 670 188
- DE-A1- 4 241 245
- DE-A1- 4 241 246

## Beschreibung

Gegenstand der vorliegenden Erfindung ist die Verwendung von Rest- und/oder Abfallstoffen als Einsatzmaterialien in Elektroniederschachtöfen.

Bei Elektroniederschachtöfen besteht das Ofengefäß bzw. die Ofenwanne aus einem tragenden Element, welches einem Stahlmanteltiegel ähnelt, der mit vertikalen und horizontalen Stahlrippen zur Verstärkung und Kühlung ausgestattet ist. Der Stahltiegel selbst ist am Boden mit einer feuerfesten mineralischen Masse ausgekleidet und seine Wandungen sind durch eine feuerfeste Ausmauerung gegen die thermischen Beanspruchungen geschützt. Zusätzlich ist der Boden über der Feuerfestmasse mit Kohlenstoffblöcken ausgekleidet. Der Deckel eines Elektroniederschachtofens besteht typischerweise aus einer wassergekühlten Tragkonstruktion, die zusätzlich feuerfeste Ausmauerungselemente enthalten kann. Zur Erzeugung der benötigten hohen Temperaturen weisen Elektroniederschachtöfen so genannte Soederberg-Elektroden auf, bei denen es sich um selbstbrennende und/oder selbstbackende Hohletektroden handelt. Über diese Elektroden wird dem Ofen der Strom zugeführt und die Rohstoffe werden so bis zur gewünschten Reaktionstemperatur erwärmt.

Elektroniederschachtöfen oder elektrische Lichtbogenöfen werden auch zur Herstellung von Calciumcarbid eingesetzt.

Calciumcarbid stellt seit Jahrzehnten eine konstant wichtige chemische Grundchemikalie dar, die beispielsweise zur Herstellung von Kalkstickstoff, NCN-Derivaten, Acetylengas, sowie Acetylen-Folgeprodukten und in jüngerer Zeit auch als Entschwefelungsmittel in der Eisen- und Stahlindustrie verwendet wird.

Den so genannten Carbidöfen werden mit Hilfe spezieller Beschickungssysteme die jeweiligen Rohstoffe in stöchiometrischer Mischung zugeführt. Der Branntkalk und auch die verschiedenen Kokstypen, wie z. B. Steinkohlenkoks, Braunkohlenkoks oder Petrolkoks, werden über Waagensysteme gemischt am Ofen vorgelegt. Die im Ofen befindliche Rohstoffmischung, die auch als Möller bezeichnet wird, wird durch den über die oben erwähnten Soederberg-Elektroden zugeführten Strom erwärmt. Der benötigte elektrische Strom, der über Hochspannungsleitungen im Hochvoltbereich angeliefert wird, muss auf ca. 200-300 Volt und ca. 70000 bis 140 000 A heruntermodifiziert werden, um so die Beheizung des Carbidofens, die als Widerstandsheizung ausgelegt ist, zu gewährleisten. Der eigentliche Schmelzprozess findet an den Spitzen der runden und in den Ofen ragenden Soederberg-Elektroden bei Temperaturen zwischen 1700 und 2500 °C statt.

Der spezifische Möller wird unter den geschilderten Bedingungen so lange erwärmt, bis es zu einer thermischen Spaltung von Calciumoxid kommt. Die entstehenden Spaltprodukte in Form von gasförmigem Calcium und Sauerstoff steigen durch die Möllerschüttung nach oben und stabilisieren sich dabei mit Kohlenstoff zu Calciumcarbid und Kohlenmonoxid. In diesen großtechnischen Prozessen wird Calciumcarbid mit einem Carbidgehalt zwischen 75 und 80 % und ein Carbidofengas mit ca. 60 bis 80 Vol.-% Kohlenmonoxid und ca. 10 - 30 Vol.-% Wasserstoff erzeugt. Dabei hängt die Zusammensetzung des Ofengases sehr stark von der Art der eingesetzten so genannten Schwarzstoffe ab. Das erhaltene geschmolzene Carbid wird über Abstiche aus dem Carbidofen mit Temperaturen von ca. 1900 °C abgezogen, abgekühlt, gebrochen und anschließend in die Carbidflaschen abgefüllt, die gleichzeitig als typische Transportgebinde für Carbid dienen.

Das geschilderte elektrothermische Verfahren ist sehr kostenintensiv, weil zum einen für die Erzeugung der erforderlichen Reaktionstemperatur von 2000 bis 2300 °C große Strommengen erforderlich sind und weil zum anderen an die Reinheit und Teilchengröße der Ausgangsstoffe hohe Anforderungen gestellt werden. So werden in fast allen Produktionsanlagen die Carbidöfen mit einer Mischung aus kleinstückigem Branntkalt und Koks bzw. Anthrazit in einem Verhältnis von 60 : 40 und mit einer Teilchengröße von ca. 5 bis 40 mm eingesetzt, wodurch der Aufwand für die Herstellung der Rohstoffe, die Bevorratung und die Beschickung der Carbidöfen relativ aufwendig wird.

Allerdings können die im beschriebenen Verfahren entstehenden Gase, nämlich Kohlenmonoxid und Wasserstoff, andererseits als Koppelprodukte gewonnen und sowohl stofflich als auch thermisch in nachgeschalteten Prozessen verwertet werden.

In der Vergangenheit hat es nicht an Versuchen gefehlt, den spezifischen Energieverbrauch des Calciumcarbidprozesses in Elektroniederschachtöfen zu senken und/oder auf der Rohstoffseite Kosten einzusparen. Ein alternativer Weg bestand darin, die Ausgangskomponenten in verdichteter Form einzusetzen, wobei die entsprechenden Formkörper aus den Reaktionspartnern Calciumoxid und Koks im geforderten stöchiometrischen Verhältnis bestanden. Derartige Presslinge bzw. Briketts sind in der Patentschriftte DD 123185 beschrieben, wobei die Kalk-, Koksbriketts auch ohne Einsatz von Bindemitteln erzeugt werden, wenn der Kalk in Form von Löschkalk gemeinsam mit dem Koks auf hohe Feinheiten genahlen und als Mahlgut anschließend durch Hochdruckbrikettierung verpresst wird. Ein ähnliches Verfahren, bei dem Presslinge in Elektroniederschachtöfen bei der Calciumcarbidherstellung eingesetzt werden, ist aus der Patentschrift DD 139948 bekannt.

Ein Verfahren zur Herstellung von Calciumcarbid durch Umsetzten einer Kohlenstoffkomponente mit Caliumoxid im elektrischen Lichtbogenofen ist aus der deutschen Offenlegungsschrift DE 4241246 A1 bekannt. Ausgehend von relativ kostengünstigen Rohstoffen in Form verkleinerter Kunststoffabfälle und ohne großen technischen Aufwand kann eine Kohlenstoffkomponente bereitgestellt werden, die problemlos bei der Herstellung von Calciumcarbid eingesetzt werden kann. Die zerkleinerten Kunststoffabfälle werden gemäß diesem Verfahren in Gegenwart von feinteiligem Calciumoxid bei Temperaturen von 600 bis 1400 °C in einem Kammerofen verkokt. Die bei der Verkokung entstehenden heißen Abgase werden vorzugsweise nach einer Entstaubung und evtl. gemeinsam mit den Abgasen aus der Calciumcarbidproduktion für die Stromerzeugung herangezogen. Beschrieben ist auch, dass die besonders hochwertigen und reinen Abgase alternativ bzw. zusätzlich auch als Heizgase für die Kokskammern genutzt oder als Synthesegase verwendet werden können. Die heißen, in Keramikfaserfiltern vom Staub gereinigten Gase aus der Verkokung und dem Carbidofen werden gemäß dem vorgeschlagenen Verfahren in einer Brennkammer verbrannt und die erzeugte Wärme über APC-Kessel und Dampfturbinen verstromt. Die erzeugte Strommenge trägt angeblich den gesamten benötigten Strombedarf für die Carbidproduktion, der in einem Bereich von 28 MWh/t Carbid lag. Bei den als Ausgangsmaterialien verwendeten Kunststoffabfällen handelt es sich um Thermoplaste, die typischerweise aus der Gruppe der Polyethylene, Polypropylene bzw. Polystyrole ausgewählt werden.

Ein weiteres Verfahren zur Herstellung von Calciumcarbid durch Umsetzung einer Kohlenstoffkomponente mit Calciumoxid im elektrischen Lichtbogenofen hat die deutsche Offentegungsschrift DE 4241245 A1 zum Gegenstand. Als Kohlenstoffkomponente werden zerkleinerte Kunststoffabfälle eingesetzt, die in Gegenwart von kleinteiligem Calciumoxid durch Pyrolyse bei 400 bis 800 °C und anschließend durch Calzinierung des entstehenden Calciumoxid-/Pyrolysekoksgemisches bei 1000 bis 1300 °C im Drehrohrofen vorab aufbereitet wurden.

Auf ein ähnliches Verfahren greift die deutsche Offenlegungsschrift DE 4241244 A1 zurück. Als Kohlenstoffkomponente werden ebenfalls zerkleinerte Kunststoffabfälle eingesetzt, die in Gegenwart von feinteiligem Calciumoxid bei Temperaturen von 600 bis 1300 °C im Drehrohrofen pyrolysiert worden sind. Auf diese Weise soll eine praktisch vollständige und umweltfreundliche Verwertung von Kunststoffabfällen möglich sein, wobei außerdem für den Calciumcarbidprozess eine besonders kostengünstige Kohlenstoffkomponente erschlossen worden sein soll.

Ebenfalls zerkleinerter Kunststoffabfälle als Kohlenstoffkomponente bedient sich DE 4241243 A1. Bei dem dort beschriebenen Verfahren zur Herstellung von Calciumcarbid im elektrischen Lichtbogenofen werden die zerkleinerten Kunststoffabfälle zuerst bei 600 bis 1000 °C pyrolysiert, dann das so erhaltene Pyrolysegas bei 1200 bis 1900 °C teilverbrannt und schließlich das Ruß/Gasgemisch auf 450 bis 800 °C abgekühlt, bzw. der Ruß mit feinteiligem und/oder stückigem Calciumoxid abgeschieden.

Seit dem Zeitraum der zuletzt genannten Offenlegungsschriften aus dem Jahr 1992 haben sich die Rahmenbedingungen für die üblicherweise angewendeten Verfahren zur Herstellung von Calciumcarbid auf der Energie- und Rohstoffseite weiter verschlechtert. Wie bereits beschrieben, erfordert der Carbidprozess erhebliche Strommengen zur Erzeugung der notwendigen Reaktionstemperatur. Der ständige Anstieg der Strompreise auch für industrielle Abnehmer hat in den letzten Jahren kontinuierlich ein Ausmaß angenommen, das gerade auch auf industrieller Abnehmerseite zahlreiche großtechnische Verfahren unter wirtschaftlichen Gesichtspunkten in Frage stellt. Aus diesem Grund wird weiterhin nach Alternativen gesucht, um die bestehenden Verfahren von den steigenden Kosten für externe Stromlieferungen abzukoppeln und eigene Stromgewinnungsmöglichkeiten zu realisieren.

Auch auf dem Gebiet anderer Rohstoffe wird seit langem nach Alternativen gesucht, um sich bspw. von Kohle bzw. Koks weiter unabhängig zu machen. In diesem Zusammenhang haben die gesetzgeberischen Vorgaben einen weiteren Handlungsbedarf in der Form geschaffen, als Siedlungsabfälle nicht mehr deponiert sondern einer Wiederverwertung zugeführt werden müssen. An dieser Stelle sei auf die technische Anleitung Siedlungsabfall (TASI) vom 01.06.2005 verwiesen. Hier und auf Basis bereits bestehender Erkenntnisse kommen insbesondere Kunststoffe in Frage, die in großen Mengen u. a. als Fraktionen aus dem Dualen System und als Gewerbereststoffe zur Verfügung stehen.

Für die vorliegende Erfindung hat sich aufgrund der geschilderten geänderten Rahmenbedingungen und der Nachteile des Standes der Technik insgesamt die Aufgabe gestellt, Rest- und/oder Abfallstoffe als Einsatzmaterialien in Elektroniederschachtöfen einer neuen Verwendung zuzuführen.

Gelöst wurde diese Aufgabe mit einer entsprechenden Verwendung gemäß Anspruch 1, bei der die Rest- und/oder Abfallstoffe zur thermischen Verwertung und/oder als Kohlenstoffquelle eingesetzt werden.

Überraschend hat sich herausgestellt, dass im erfindungsgemäßen Zusammenhang die Energiegehalte der eingesetzten Rest- und Abfallstoffe für Elektroniederschachtöfen im Wesentlichen unbedeutend sind. Auch spielt die chemische Zusammensetzung eine nur untergeordnete Rolle, wodurch sich eine Universalität hinsichtlich der eingesetzten Ausgangsmaterialien ergibt, die so nicht vorherzusehen war. Es war insbesondere überraschend, dass auch mittelkalorische Rest- und Abfallstoffe als Einsatzmaterialien in Frage kommen, die hohe Halogenanteile aufweisen, ohne dass sich hinsichtlich ihres Energiegehalts oder ihrer "Verunreinigungen" gravierende Nachteile im Zusammenhang mit der thermischen Verwertung oder ihrer spezifischen Verwendung als Kohlenstoffquelle ergeben.

Im vorliegenden Zusammenhang hat es sich als besonders günstig erwiesen, wenn es sich bei den Elektroniederschachtöfen um einen gedeckelten Niederschachtofen handelt. Dieser sollte gemäß vorliegender Erfindung mindestens eine Hohlelektrode (Soederderbergelektrode) aufweisen, um so die in Frage kommenden Rest- und/oder Abfallstoffe im Zusammenhang mit der erfindungsgemäßen Verwendung leichter einbringen zu können.

Wie bereits angedeutet, war es vollkommen überraschend, dass die geeigneten Rest- und/oder Abfallstoffe im Wesentlichen keinerlei Einschränkung unterliegen. Unter Umwelt- und Recyclinggesichtspunkten und insbesondere auch, um den geltenden Gesetzen und Richtlinien Rechnung zu tragen, kommen bevorzugt Siedlungsabfälle und Gewerberückstände in Frage, die selbstverständlich auch als beliebige Mischungen verwendet werden können. Als ebenfalls geeignet haben sich erfindungsgemäß solche Rest- und/oder Abfallstoffe erwiesen, bei denen es sich alternativ um organische und schwer entsorgbare Reststoffe und insbesondere um Arzneimittel, um Elektronikschrott und hochkalorische und/oder gesundheitsgefährdende Stoffe oder Mischungen daraus handelt.

Ein wichtiger Aspekt, der von der vorliegenden Erfindung berücksichtigt wird, besteht darin, dass die Rest- und/oder Abfallstoffe auch Halogengehalte aufweisen können. Diese sollten insbesondere in Form von Chlor und/oder Fluor vorliegen und besonders bevorzugt Anteile von 0,1 bis 10 Gew.% und besonders bevorzugt von 1,0 bis 5,0 Gew.%, jeweils bezogen auf den eingesetzten Rohstoffstrom, betragen.

Es kommen insbesondere solche Rest- und/oder Abfallstoffe in Frage, die Kunststoffanteile enthalten und insbesondere solche aus PVC-Abreicherungsverfahren; als besonders bevorzugt sind solche anzusehen, bei denen es sich um PVC-reiche Fraktionen aus den sog. Nahinfrarot (NIR)-Sortierverfahren handelt, oder aber bei denen das NIR-Sortierverfahren nicht angewendet wurde. Mit dem beschriebenen Sortierverfahren werden PVC-Anteile mit Hilfe spektrometrischer Parameter gezielt aus dem Abfallstrom aussortiert.

Üblicherweise werden Verfahren in Elektroniederschachtöfen unter extrem hohen Temperaturen durchgeführt, wie es bei Carbidprozessen insbesondere der Fall ist. Im Carbidofen herrschen außerdem stark reduzierende Bedingungen, die erfindungsgemäß das Potenzial bieten, auch entsorgungskritische Stoffe zur Verwertung einzusetzen. Halogenhaltige und insbesondere chlorhaltige Stoffe lassen sich derzeit nur unter sehr aufwendigen Bedingungen thermisch verwerten. Im Rahmen der erfindungsgemäßen Verwendung hat sich nun herausgestellt, dass der Einsatz insbesondere von chlorhaltigen Sekundärrohstoffen im Carbidprozess nicht zu elementarem Chlor im Carbidofengas führt, sondern dass das Chlor sofort mit dem ebenfalls anwesenden Calcium reagiert und direkt als Calciumchlorid gebunden wird. Auf sonst üblicherweise im Zusammenhang halogenierten Einsatzmaterialien notwendige und extrem aufwendige Werkstoffinvestitionen kann aus diesem Grund insbesondere in den nachgeschalteten Verbrennungs- und Dampfeinheiten verzichtet werden. Ausserdem sind unverändert unkritische Dioxinwerte im Abgas des Elektroniederschachtofens zu beobachten.

Die bereits mehrfach erwähnten Soederbergelektroden, die als Hohlelektroden ausgeführt sind, haben sich ebenfalls in Carbidöfen als äußerst geeignete Mittel erwiesen, um Stoffe direkt in das Herdbett einzubringen, ohne dass diese das sonst übliche Temperaturprofil der Möllerschüttung durchlaufen müssen. Erfindungsgemäß wurde nun festgestellt, dass dieser Beschickungsweg auch geeignet ist, um Stoffe im Carbidofen zu entsorgen, die sich erst bei sehr hohen Temperaturen spalten lassen, wie z. B. Fluorchlorkohlenwasserstoffe. Im Falle dieser FCK bildet sich neben Calciumchlorid auch Flussspat (CaF₂), der im Folgeprozess bei der Herstellung von Kalkstickstoff gezielt als Hilfsstoff ohnehin eingesetzt wird. Auch in diesem Fall ist deshalb eine vorteilhafte stoffliche Verwertung gegeben.

Hinsichtlich der Rest- und/oder Abfallstoffe hat es sich im Zusammenhang mit der vorliegenden Erfindung als günstig erwiesen, wenn sie einen Teilchendurchmesser bis 100 mm, bevorzugt bis 80 mm und besonders bevorzugt zwischen 5 und 50 mm aufweisen. Für bestimmte Anwendungsfälle kann es ebenfalls von Vorteil sein, wenn die Rest- und/oder Abfallstoffe Kunststoffanteile enthalten, bei denen es sich um Sekundärrohstoffe aus der Kunststoffwiederverwertung handelt. Diese sollten dann insbesondere in kompaktierter und/oder extrudierter Form vorliegen und vorzugsweise in dreidimensionaler Form, wobei Teilchendurchmesser bis 100 mm und besonders bevorzugt zwischen 40 und 60 mm als besonders vorteilhaft zu bezeichnen sind. Von der vorliegenden Erfindung wird auch eine Alternative berücksichtigt, bei der die Kunststoffanteile Folienflitter und/oder Schredderleichtfraktionen darstellen, wie sie insbesondere aus der Altfahrzeugverwertung hervorgehen.

Insgesamt kann es sich bei den eingesetzten Kunststoffanteilen um Polyethylen, Polypropylen, Polyurethane, Polyacrylnitrile und andere Vertreter handeln, die in möglichst dreidimensionaler Form als Extrudate oder ähnliche Kompaktate der Möllerschüttung zugemischt und im Prozess des Elektroniederschachtofens pyrolysiert werden.

Kunststoffanteile aus Polyethylen, Polypropylen, Polyurethanen, Polyacrylnitrilen und PVC und selbstverständlich auch beliebige Mischungen daraus werden als besonders bevorzugt angesehen.

Nicht zuletzt unter verfahrenstechnischen Gesichtspunkten hat es sich als vorteilhaft herausgestellt, wenn die Rest- und/oder Abfallstoffe bei der erfindungsgemäßen Verwendung als Möllerbestandteil eingesetzt und/oder über die Hohlelektrode, also die Soederbergelektrode in die Ofenschüttung eingebracht werden.

Ebenso wie die Form, die Zusammensetzung und die chemische Natur keinerlei Beschränkung im vorliegenden Zusammenhang darstellen, ist auch die Menge an eingesetzten Rest- und/oder Abfallstoffen bei der beanspruchten Verwendung nicht limitierend. Es wird allerdings empfohlen, dass die Rest- und/oder Abfallstoffe jeweils bezogen auf die herzustellende Produktmenge in einer Menge von maximal 100 Gew.-%, insbesondere 5 bis 90 Gew.-% und besonders bevorzugt 10 bis 70 Gew.-% zugesetzt werden.

Um die erfindungsgemäße Verwendung möglichst optimal zu gestalten, empfiehlt es sich auch, die Ofentemperaturen im Herdbett zwischen 1700 und 2500 °C einzustellen. Als weiterhin vorteilhaft ist eine Variante anzusehen, bei der die Rest- und/oder Abfallstoffe das Ofenbett von oben nach unten durchwandern und dabei vorzugsweise ein Temperaturprofil von anfänglich 300 bis 700 °C im oberen Ofenbereich bis schließlich 1800 bis 2200 °C im Herdbett durchlaufen. Als besonders geeignet haben sich Temperaturbereiche um 600 C als geeignet dafür erwiesen, um kurzkettige Kohlenwasserstoffe zu erzeugen. Auf diesem Weg wird ein erheblicher Anteil der eingesetzten Rest- und/oder Abfallstoffe und insbesondere der Kunststoffe in Gas umgewandelt, während ein Rest als Kohlenstoff im Ofen verbleibt und in dieser Form als Rohstoff für die Reaktion, bei der es sich meist um eine Carbidreaktion handelt wird, genutzt werden kann. Die beteiligten gasförmigen Anteile lockern als flüchtige Bestandteile den Möller insgesamt auf und tragen so zu einer weiter verbesserten Nutzung der Rohstoffe bei.

Die vorliegende Erfindung umfasst ebenfalls die Möglichkeit, die entstehenden Pyrolyseprodukte zur Stromerzeugung einzusetzen, was vorzugsweise mit Hilfe eines Gasmotors, einer Gasturbine und/oder von Hochdruckdampf geschieht. Das Pyrolysegas verlässt den Elektroniederschachofen meist über den Ofendeckel und wird an schließend über kurze und isolierte Rohrleitungswege einer Brennkammer zugeführt; dort wird das Gasgemisch verbrannt und die Heißgase zur Erzeugung von Hochdruckdampf genutzt. Dieser kann anschließend über Dampfkondensationsturbinen zur Stromerzeugung genutzt werden. Die vorgeschlagene Verwendung stellt insbesondere deshalb einen Fortschritt dar, da nun auch unverbrannter Ofenstaub, so genannter UVO-Staub mit ca. 20 bis 30 % Graphitanteil einer sinnvollen Weiterverarbeitung zugeführt werden kann. Das mit diesem UVO-Staub zusammenhängende Cyanidproblem war bisher meist durch aufwändiges Nachwaschen und eine abschließende finale Deponierung zu lösen. Der eben erwähnte UVO-Staub kann nun jedoch gemeinsam mit Pyrolysegas in so genannten Dreiphasengemischen (nämlich Pyrolysegas, Pyrolyseöl, Staub) in die Brennkammer eingebracht werden.

Zwar wurde in der vorangehenden Beschreibung zur Veranschaulichung der Vorteile der erfindungsgemäßen Verwendung meist auf Carbidöfen verwiesen; die beschriebene Verwertung der Rest- und/oder Abfallstoffe steht allerdings nicht nur im Zusammenhang mit der Herstellung von Calciumcarbid, sondern die erfindungsgemäße Verwendung kann auch bei der Herstellung von Ferrosilicium, Ferrochrom, Ferromangan, Ferronickel, Siliciummangan, Calcium-Silicium-(CaSi-)Legierungen, sowie von Phosphor und Silicium eingesetzt werden. Die vorliegende Erfindung berücksichtigt abschließend noch die Möglichkeit, dass das mit Hilfe der beanspruchten Verwendung vorzugsweise erhaltene Calciumcarbid in einem nachgeschalteten Verfahren zu. Erzeugung von Acytelen oder Acetylenfolgeprodukten eingesetzt wird.

Während aus dem bisherigen Stand der Technik generell die thermische Verwertung, insbesondere im Zusammenhang mit Zementöfen oder der Hausmüllverbrennung, bekannt war, ist die neue Verwendung von Rest und/oder Abfallstoffen als Einsatzmaterialen in Elektroniederschachtöfen auch zur thermischen Verwertung ein gravierender Fortschritt im Zusammenhang mit der Verwertung von Abfallstoffen als Sekundärrohstoffe.

Insgesamt hat sich bei der großtechnischen Verwertung der erfindungsgemäßen Verwendung herausgestellt, dass solche Rest- und Abfallstoffe nun zur thermischen Verwertung und/oder als Kohlenstoffquelle in Elektroniederschachtöfen eingesetzt werden können, die bislang nur anderweitig unter großem Aufwand verwertet bzw. endgelagert werden konnten. Diese Rest- und Abfallstoffe jeglicher Art sollten allerdings mechanisch oder pneumatisch förderbar sein, um so u. a. die Beschickung der meist eingesetzten Hohlelektroden ohne Probleme zu gewährleisten. Insgesamt handelt es sich bei der vorgeschlagenen Verwendung um eine relativ einfache und elegante Methode, um zum einen Kultur-, Siedlungs- und Produktionsabfälle aufgrund ihrer heizwertreichen Anteile einer neuen Verwertung zuzuführen, wodurch Entsorgungskosten gespart werden und die Umwelt geschont wird, und zum anderen Alternativen zu fossilen Brennstoffen und weiter steigenden Strompreisen anzubieten, was unter nachhaltigen Gesichtspunkten eine deutliche Verbesserung darstellt.

Die Erfindung betrifft insbesondere die Verwendung von Rest- und/oder Abfallstoffen als Einsatzmaterialien in Elektroniederschachtöfen, wobei die Rest und/oder Abfallstoffe zur thermischen Verwertung und/oder als Kohlenstoffquelle eingesetzt werden. Der für diese Verwendung in Frage kommende Niederschachtofen liegt meist in gedeckelter Form vor und weist mindestens eine Hohlelektrode zum Einbringen der Ausgangsstoffe auf. Bei den Rest- und/oder Abfallstoffen sollte es sich um Siedlungsabfälle oder Gewerberückstände handeln, oder aber alternativ um organische und schwer entsorgbahre Reststoffe, wie Arzneimittel, Elektronikschrott, hochkalorische und/oder gesundheitsgefährdende Stoffe, die auch halogeniert sein können. Diese Rest- und/oder Abfallstoffe mit einem bevorzugten Teilchendurchmesser bis 100 mm sollten insbesondere in kompaktierter oder extrudierter Form über die Hohlelektrode in die Ofenschüttung eingebracht werden. Bei Ofentemperaturen zwischen 1700 und 2500 °C werden die Rest- und/oder Abfallstoffe bis zu 95% in Pyrolysegase umgewandelt und der erhaltene Kohlenstoff als Kohlenstoffquelle eingesetzt. Auf diese Weise kann die Herstellung von Calciumcarbid, Ferrosilicium, Ferrochrom usw. energetisch deutlich verbessert werden.

Die nachfolgenden Beispiele verdeutlichen die Vorteile der vorliegenden Erfindung.

### Beispiel 1

0,15 Massenanteile einer kunststoffhaltigen Abfalffraktion werden mit einem Massenanteil einer Standard-Möllermischung weitgehend homogenisiert und über die Grobmöllerdosiersysteme einem Elektroniederschachtofen zur Herstellung von Calciumcarbid zugeführt. Bei diesem Elektroniederschachtofen handelt es sich um eine grosstechnische Anlage mit ca. 300 t Möller-Füllmasse. Die elektrische Leistung des Carbidofens wird auf ca. 20 MWh eingestellt, wodurch sich eine Durchsatzmenge der Kunststoff-/Möller-Mischung von ca. 225 t/Tag ergibt. Die Reaktionstemperaturen werden so gesteuert, dass sich in der Carbidreaktionszone (Herdbett) eine Temperatur im Bereich von 2000 bis 2200 °C und im oberen Möllerbereich eine Temperatur von 500 - 650 °C einstellt. Die eingebrachten kunststoffhaltigen Abfälle werden entsprechend der vorliegenden Reaktionsbedingungen thermisch in Pyrolysegas und Koks aufgespalten. Dieser entstehende Koks reduziert die notwendige Primärkohlenstoffmenge für die Carbidreaktion. Daher wird die Dosierung des Primärkohlenstoffs basierend auf Analysen des Carbidgehaltes im produzierten Carbid entsprechend reduziert.

Um den Staubanteil aus dem entstehenden Ofengas abzutrennen wird das Gas über eine Gasfilteranlage geleitet, die mit keramischen Filterelementen ausgestattet ist. Um eine Kondensation von höherkettigen Kohlenwasserstoffen zu vermeiden, wird die Filtration in einem Temperaturbereich von 300 bis 400 °C durchgeführt. Anschließend wird das Gas mittels Gaskühler auf ca. 30 °C abgekühlt, wodurch die kondensierbaren Gasanteile aus dem Gasstrom kondensiert werden.

Die so erzeugte und gereinigte Ofengasmenge erhöhte sich von ca. 140 Nm³/MWh elektrischer Ofenleistung auf ca. 170 Nm³/MWh elektrischer Ofenleistung. Gleichzeitig erhöhte sich der Heizwert des Gases von 3,1 KW/Nm³ auf ca. 4,6 KW/Nm³. Dadurch ergibt sich in der Gesamtenergiebilanz des Ofengases eine Erhöhung der thermischen Energiemenge von 8,7 MWh auf 15,6 MWh.

## Patentansprüche

1. Verwendung von Rest- und/oder Abfallstoffen mit einem Halogengehalt im Bereich von 0,1 bis 10 Gew.-%, besonders bevorzugt von 1,0 bis 5,0 Gew.-%, jeweils bezogen auf den eingesetzten Rohstoffstrom als Einsatzmaterialien in Elektroniederschachtöfen, **dadurch gekennzeichnet, dass** die Rest- und/oder Abfallstoffe zur thermischen Verwertung und als Kohlenstoffquelle bei der Herstellung von Calciumcarbid eingesetzt werden.

2. Verwendung nach Anspruch 1 in einem gedeckelten Elektroniederschachtofen.

3. Verwendung nach einem der Ansprüche 1 oder 2, **dadurch gekennzeichnet, dass** der Elektroniederschachtofen mindestens eine Hohlelektrode, insbesondere eine Söderbergelektrode aufweist.

4. Verwendung nach einem der Ansprüche 1 bis 3, **dadurch gekennzeichnet, dass** es sich bei den Rest- und/oder Abfallstoffen um Siedlungsabfälle, Gewerberückstände oder Mischungen daraus, oder um organische und schwer entsorgbare Reststoffe, insbesondere um Arzneimittel, Elektronikschrott, hochkalorische und/oder gesundheitsgefährdende Stoffe oder Mischungen daraus handelt.

5. Verwendung nach einem der Ansprüche 1 bis 4, **dadurch gekennzeichnet, dass** der Halogengehalt in Form von Chlor und/oder Fluor vorliegt.

6. Verwendung nach einem der Ansprüche 1 bis 5, **dadurch gekennzeichnet, dass** die Rest- und/oder Abfallstoffe Kunststoffanteile enthalten, insbesondere aus PVC-Abreicherungsverfahren, und besonders bevorzugt solche, bei denen es sich um PVC-reiche Fraktionen aus NIR-(Naheinfrarot-)-Sortierverfahren handelt oder bei denen das NIR-Sortierverfahren nicht angewendet wurde.

7. Verwendung nach einem der Ansprüche 1 bis 6, **dadurch gekennzeichnet, dass** die Rest- und/oder Abfallstoffe einen Teilchendurchmesser bis 100 mm, bevorzugt bis 80 mm und besonders bevorzugt zwischen 5 und 50 mm aufweisen.

8. Verwendung nach einem der Ansprüche 1 bis 7, **dadurch gekennzeichnet, dass** es sich bei den Kunststoffanteilen um Sekundärrohstoffe aus der Kunststoffwiederverwertung, insbesondere in kompaktierter und/oder extrudierter Form, vorzugsweise in dreidimensionaler Form, und bevorzugt mit einem Teilchendurchmesser bis 100 mm und besonders bevorzugt zwischen 40 und 60 mm handelt, oder, dass die Kunststoffanteile Folienflitter und/oder Schredderleichtfraktionen, insbesondere aus der Altfahrzeugverwertung, darstellen.

9. Verwendung nach einem der Ansprüche 1 bis 8, **dadurch gekennzeichnet, dass** die Kunststoffanteile aus Polyethylen, Polypropylen, Polyurethanen, Polyacrylnitrilen, PVC oder Mischungen daraus bestehen.

10. Verwendung nach einem der Ansprüche 1 bis 9, **dadurch gekennzeichnet, dass** die Rest- und/oder Abfallstoffe als Möllerbestandteil eingesetzt und/oder über die Hohlelektrode in die Ofenschüttung eingebracht werden.

11. Verwendung nach einem der Ansprüche 1 bis 10, **dadurch gekennzeichnet, dass** die Menge an eingesetztem Rest- und/oder Abfallstoff, bezogen auf die herzustellende Produktmenge, maximal 100 Gew.-%, insbesondere 5 bis 90 Gew.-% und besonders bevorzugt 10 bis 70 Gew.-%, beträgt.

12. Verwendung nach einem der Ansprüche 1 bis 11, **dadurch gekennzeichnet, dass** die Ofentemperaturen im Herdbett zwischen 1 700 und 2 500 °C betragen.

13. Verwendung nach einem der Ansprüche 1 bis 12, **dadurch gekennzeichnet, dass** die Rest- und/oder Abfallstoffe das Ofenbett von oben nach unten durchwandern und dabei vorzugsweise ein Temperaturprofil von anfänglich 300 bis 700 °C bis schließlich 1 800 bis 2 200 °C im Herdbett durchlaufen.

14. Verwendung nach einem der Ansprüche 1 bis 13, **dadurch gekennzeichnet, dass** die Rest- und/oder Abfallstoffe bis zu 95 %, vorzugsweise bis zu 80 % und besonders bevorzugt zu maximal 30 bis 70 % in Pyrolysegas umgewandelt werden und der enthaltene Kohlenstoff als Kohlenstoff-Quelle eingesetzt wird.

15. Verwendung nach einem der Ansprüche 1 bis 14, **dadurch gekennzeichnet, dass** die entstehenden Pyrolyseprodukte zur Stromerzeugung eingesetzt werden, was vorzugsweise mit Hilfe eines Gasmotors, einer Gasturbine und/oder von Hochdruckdampf geschieht.

## Claims

1. Use of residual matter and/or waste with a halogen content in the range from 0.1 to 10 wt.%, particularly preferably from 1.0 to 5.0 wt.%, in each case relative to the raw material stream used as feed materials in electric low-shaft furnaces, **characterised in that** the residual matter and/or waste is used for thermal recycling and as a carbon source in the manufacture of calcium carbide.

2. Use according to claim 1, in a capped electric low-shaft furnace.

3. Use according to either of claim 1 or claim 2, **characterised in that** the electric low-shaft furnace comprises at least one hollow electrode, in particular a Söderberg electrode.

4. Use according to any one of claims 1 to 3, **characterised in that** the residual matter and/or waste comprises residential waste, industrial waste or mixtures thereof, or organic residual matter which is difficult to dispose of, in particular medicaments, electronic scrap, substances which have a high calorific content and/or are hazardous to health or mixtures thereof.

5. Use according to any one of claims 1 to 4, **characterised in that** the halogen content is present in the form of chlorine and/or fluorine.

6. Use according to any one of claims 1 to 5, **characterised in that** the residual matter and/or waste contains plastics fractions, in particular from PVC removal processes, and particularly preferably those which are PVC-rich fractions from NIR (near infrared) sorting processes or in which the NIR sorting process was not used.

7. Use according to any one of claims 1 to 6, **characterised in that** the residual matter and/or waste has a particle diameter of up to 100 mm, preferably of up to 80 mm and particularly preferably of between 5 and 50 mm.

8. Use according to any one of claims 1 to 7, **characterised in that** the plastics fractions comprise secondary raw materials from plastics recycling, in particular in a compacted and/or extruded form, preferably in a three-dimensional form, and preferably with a particle diameter of up to 100 mm and particularly preferably of between 40 and 60 mm, or, **in that** the plastics fractions are chopped film scrap and/or light shredder fractions, in particular from end-of-life vehicle recycling.

9. Use according to any one of claims 1 to 8, **characterised in that** the plastics fractions consist of polyethylene, polypropylene, polyurethanes, polyacrylonitriles, PVC or mixtures thereof.

10. Use according to any one of claims 1 to 9, **characterised in that** the residual matter and/or waste is used as a burden component and/or introduced into the furnace charge via the hollow electrode.

11. Use according to any one of claims 1 to 10, **characterised in that** the quantity of residual matter and/or waste used, relative to the quantity of product to be manufactured, amounts to at most 100 wt.%, in particular 5 to 90 wt.% and particularly preferably 10 to 70 wt.%.

12. Use according to any one of claims 1 to 11, **characterised in that** the furnace temperatures in the hearth bed are between 1,700 and 2,500°C.

13. Use according to any one of claims 1 to 12, **characterised in that** the residual matter and/or waste migrates from the top downwards through the furnace bed and, in so doing, preferably passes through a temperature profile from initially 300 to 700°C to finally 1,800 to 2,200°C in the hearth bed.

14. Use according to any one of claims 1 to 13, **characterised in that** the residual matter and/or waste is converted to an extent of up to 95%, preferably of up to 80% and particularly preferably of at most 30 to 70% into pyrolysis gas and the carbon present is used as a carbon source.

15. Use according to any one of claims 1 to 14, **characterised in that** the resultant pyrolysis products are used for electricity generation, this preferably proceeding with the assistance of a gas engine, a gas turbine and/or high pressure steam.

## Revendications

1. Utilisation de résidus et/ou de déchets avec une teneur en halogène dans la plage de 0,1 à 10 % en poids, de manière particulièrement préférée de 1,0 à 5,0 % en poids, respectivement sur base du flux de matières brutes utilisé comme matériaux de cémentation dans des fours électriques à cuve basse, **caractérisée en ce que** les résidus et/ou les déchets sont utilisés pour une utilisation thermique et comme source de carbone lors de la fabrication de carbure de calcium.

2. Utilisation selon la revendication 1 dans un four électrique à cuve basse coiffé.

3. Utilisation selon l'une quelconque des revendications 1 ou 2, **caractérisée en ce que** le four électrique à cuve basse présente au moins une électrode creuse, en particulier une électrode de Söderberg.

4. Utilisation selon l'une quelconque des revendications 1 à 3, **caractérisée en ce qu'**il s'agit, pour les résidus et/ou les déchets, de déchets municipaux, de résidus industriels ou de mélanges de ceux-ci ou de résidus organiques et difficilement éliminables, en particulier de médicaments, de déchets électroniques, de substances très caloriques et/ou dangereuses pour la santé ou de mélanges de ceux-ci.

5. Utilisation selon l'une quelconque des revendications 1 à 4, **caractérisée en ce que** la teneur en halogène se présente sous la forme de chlore et/ou de fluore.

6. Utilisation selon l'une quelconque des revendications 1 à 5, **caractérisée en ce que** les résidus et/ou les déchets contiennent des parts de plastique, en particulier provenant du procédé d'appauvrissement en PVC et de manière particulièrement préférée des parts, pour lesquelles il s'agit de fractions riches en PVC provenant du procédé de triage NIR (proche infrarouge) ou pour lesquelles le procédé de triage NIR n'a pas été appliqué.

7. Utilisation selon l'une quelconque des revendications 1 à 6, **caractérisée en ce que** les résidus et/ou les déchets présentent un diamètre de particules allant jusqu'à 100 mm, de préférence jusqu'à 80 mm et de manière particulièrement préférée un diamètre compris entre 5 et 50 mm.

8. Utilisation selon l'une quelconque des revendications 1 à 7, **caractérisée en ce qu'**il s'agit pour les parts de plastique de matières brutes secondaires provenant du recyclage du plastique, en particulier sous la forme compactée et/ou extrudée, de préférence en trois dimensions, et de préférence avec un diamètre de particules allant jusqu'à 100 mm et de manière particulièrement préférée un diamètre compris entre 40 et 60 mm ou **en ce que** les parts de plastique constituent des paillettes de film et/ou des fractions légères déchiquetées, en particulier provenant de l'utilisation d'anciens véhicules.

9. Utilisation selon l'une quelconque des revendications 1 à 8, **caractérisée en ce que** les parts de plastique se composent de polyéthylène, de polypropylène, de polyuréthane, de polyacrylonitrile, de PVC ou de mélanges de ceux-ci.

10. Utilisation selon l'une quelconque des revendications 1 à 9, **caractérisée en ce que** les résidus et/ou les déchets sont utilisés comme constituants de lit de fusion et/ou sont introduits par l'électrode creuse dans le lit du four.

11. Utilisation selon l'une quelconque des revendications 1 à 10, **caractérisée en ce que** la quantité de résidus et/ou de déchets utilisés, sur base de la quantité de produit à fabriquer, s'élève au maximum à 100 % en poids, en particulier est comprise entre 5 et 90 % en poids et de manière particulièrement préférée entre 10 et 70 % en poids.

12. Utilisation selon l'une quelconque des revendications 1 à 11, **caractérisée en ce que** les températures du four dans le lit de creuset sont comprises entre 1 700 et 2 500 °C.

13. Utilisation selon l'une quelconque des revendications 1 à 12, **caractérisée en ce que** les résidus et/ou les déchets traversent le lit du four de haut en bas et passent de préférence par un profil de températures de 300 à 700 °C au début jusqu'à 1 800 à 2 200 °C à la fin dans le lit de creuset.

14. Utilisation selon l'une quelconque des revendications 1 à 13, **caractérisée en ce que** les résidus et/ou les déchets sont convertis jusqu'à 95 %, de préférence jusqu'à 80 % et de manière particulièrement préférée de 30 à 70 % au maximum en gaz de pyrolyse et le carbone contenu est utilisé comme source de carbone.

15. Utilisation selon l'une quelconque des revendications 1 à 14, **caractérisée en ce que** les produits de pyrolyse apparus sont utilisés pour la génération de courant, ce qui se produit de préférence à l'aide d'un moteur à gaz, d'une turbine à gaz et/ou de vapeur haute pression.
